# FASCICULE DE BREVET EUROPEEN

(11) **EP 1 426 507 B1**
(45) Date de publication et mention de la délivrance du brevet: **11.05.2005**
(21) Numéro de dépôt: 03078611.5
(22) Date de dépôt: 18.11.2003
(51) Int. Cl.: E03F 9/00, G05D 9/00, G05D 7/00, F16K 31/30, G05D 9/04, G05D 7/03, E03F 5/10

(54) **Régulateur de débit à décolmatage automatique**
Abflussdrossel mit automatischer Spülung
Flow control throttle with automatic declogging

(30) Priorité: 22.11.2002 FR 0214778
(43) Date de publication de la demande: 09.06.2004
(73) Titulaire: S.A.S. Saint Dizier Environnement, 59147 Gondecourt (FR)
(72) Inventeur: Viau, Jean-Yves, 59830 Cysoing (FR); Preuvot, Didier, 59493 Villeneuve d'Ascq (FR)
(74) Mandataire: Gérardin, Robert Jean René

(56) Documents cités:
- EP-A- 0 458 224
- DE-A- 19 615 206
- DE-U- 29 807 337
- GB-A- 1 525 589
- GB-A- 2 102 543

## Description

L'invention concerne les régulateurs de débit à flotteur, assurant la maîtrise des débits au sein des réseaux d'assainissement.

La maîtrise des débits en réseau séparatif ou unitaire est souvent assurée par la mise en oeuvre de régulateurs de débit à flotteur ; leurs réponses hydrauliques sont souvent bonnes, mais ils restent sensibles au colmatage lorsque la section de l'orifice de régulation est réduite par le déplacement du registre commandé par le flotteur.

En effet, le passage d'éléments grossiers ou flottants pendant cette phase de régulation correspondant aux périodes de basses eaux conduit alors à une réduction de la section libre de l'orifice, qui peut conduire à un colmatage complet de celui-ci ; il s'ensuit un dysfonctionnement hydraulique qui entraîne une élévation du niveau, avec surverse des eaux de temps sec. La fiabilité de ces régulateurs de débit impose alors des interventions fréquentes et régulières de l'exploitant.

Cependant, il existe déjà, dans l'état de la technique, différentes solutions permettant d'assurer un décolmatage automatique de ces régulateurs de débit, à savoir :
- liaison mécanique entre deux flotteurs assurant le décolmatage automatique, destinée principalement aux bassins de rétention où la hauteur d'eau à analyser est importante,
- utilisation de limiteurs de débit à Vortex, qui, ne comprenant pas d'éléments mobiles, peuvent améliorer cette fiabilité ; mais la régulation de débit reste assez imprécise avec cette sorte de régulateur,
- vanne motorisée actionnée en fonction du débit mesuré à l'aval au sein d'un canal de mesure, mais cette solution implique la présence d'énergie électrique sur le site et reste lourde techniquement et financièrement.

De tels dispositifs sont décrits notamment dans les documents suivants :
1) **Brevet européen n° 0 458 224** décrivant un dispositif d'étranglement en forme de segment commandé par un flotteur, situé sous l'eau, relié par une tige basculante, pivotant autour d'un support fixe pour effectuer des mouvements réciproques, de telle sorte que la vanne soit déplacée dans le sens de l'ouverture lorsque le niveau d'eau augmente dans la chambre du flotteur et dans le sens de la fermeture lorsque ce niveau diminue. Le dispositif de liaison, servant d'entraînement entre la vanne et l'organe d'étrangement situé sous l'eau, comporte une tige d'actionnement pivotante qui est guidée, à son extrémité opposée à l'organe d'étranglement situé sous l'eau, par une courbe de correction, fixée à la vanne et prenant en compte une formule d'écoulement pour les hauteurs d'accumulation.
   Ce dispositif, qui est destiné à réguler l'écoulement d'eau, accumulée dans une citerne de collecte des eaux de pluie ou dans des réservoirs, dans une conduite d'écoulement, par modification de la section de ladite conduite, en relation avec un flotteur immergé dans une chambre disposé avant l'organe d'étranglement, dans laquelle une accumulation artificielle est produite dès que l'écoulement du réservoir dépasse une valeur prédéterminée ; il n'est donc pas conçu pour assurer la maîtrise des débits au sein des réseaux d'assainissement avec régulation du débit par flotteur à décolmatage automatique, avec lequel, d'une part, une ouverture complète de l'orifice de régulation soit obtenue en l'absence d'écoulement par colmatage ou de dysfonctionnement du régulateur et d'autre part le dispositif de décolmatage puisse fonctionner de manière fiable et autonome avec une parfaite maîtrise de l'écoulement.
2) **Demande de brevet anglais GB-2.102.543** concernant un procédé et un dispositif de contrôle du niveau d'un liquide dans un réservoir, dont la conception est identique à celle du dispositif décrit dans le document ci-dessus analysé. Le capteur d'écoulement étant disposé en amont du régulateur, il ne permet pas d'obtenir non plus l'ouverture complète et rapide de l'orifice du régulateur dès qu'une absence ou une insuffisance d'écoulement en aval est détectée par analyse en continu de l'écoulement.

Les principaux inconvénients de ces solutions connues sont donc, dans l'ordre, une trop faible section de l'orifice de régulation lors de la phase de régulation (réduction de la section libre de l'orifice pour maintenir un débit constant), une imprécision trop grande sur la maîtrise de débit destitué, et une technologie lourde pour la solution basée sur un canal de mesure du débit régulé.

La présente invention a pour but de remédier à ces inconvénients. Cette invention, telle qu'elle est caractérisée dans les revendications, résout le problème consistant à créer un régulateur de débit à flotteur, à décolmatage automatique à commande hydraulique, avec lequel, d'une part, une ouverture complète de l'orifice de régulation soit obtenue en l'absence d'écoulement et en cas de dysfonctionnement du régulateur et, d'autre part, le dispositif de décolmatage puisse fonctionner de manière fiable et autonome avec une parfaite maîtrise de l'écoulement.

Les avantages obtenus, grâce à cette invention, consistent, principalement, en ce que l'ouverture complète de l'orifice de régulation de débit est obtenue en l'absence ou pour de faibles écoulements et en cas de colmatage de l'orifice du régulateur.

Le dispositif dont il s'agit ne nécessite pas d'énergie électrique et, malgré cela, son autonomie peut être estimée à une dizaine d'années, ce qui entraîne une très forte réduction des fréquences de contrôle de ces ouvrages, ainsi que des surverses au niveau des déversoirs d'orage.

D'autres caractéristiques et avantages apparaîtront, dans la description qui va suivre, d'un mode de réalisation du régulateur à décolmatage automatique, selon l'invention, donné à titre d'exemple non limitatif, au regard des dessins annexés, sur lesquels :
- la figure 1 représente une vue de côté schématique du régulateur de débit à décolmatage automatique, en situation de débit faible ou nul,
- la figure 2 représente le schéma du régulateur selon la figure 1, en situation d'ouverture forcée,
- la figure 3 représente le schéma du régulateur selon les figures 1 et 2, en situation de régulation normale,
- la figure 4 représente une vue de face du régulateur, en position d'ouverture minimale,
- la figure 5 représente une vue de côté du régulateur selon la figure 4,
- la figure 6 représente une vue de dessus du régulateur selon les figures 4 et 5,
- la figure 7 représente une vue de côté du déversoir d'orage équipé du régulateur de débit selon l'invention, en situation de débit nul et de pleine ouverture forcée du registre sous l'action d'un vérin,
- la figure 8 représente une vue de face, en coupe selon AA, d'un déversoir d'orage selon la figure 7, en situation de débit nul et de pleine ouverture forcée du registre sous l'action d'un vérin.

Les figures représentent un régulateur de débit à flotteur, à décolmatage automatique, réalisé selon l'invention, comportant un orifice **1** à section de passage contrôlée par un registre **2** à flotteur **3**, articulé par rapport à un caisson **4** renfermant un capteur d'écoulement **40**, constitué d'un bras à flotteur **41** de détection articulé par rapport à la partie supérieure du caisson **4**, contrôlant la position du tiroir **44** d'un distributeur **42** à deux voies, relié à une bouteille de gaz comprimé **5** par l'intermédiaire d'une vanne d'arrêt **51** et d'un détendeur **52**, au vérin pneumatique **6** par une conduite **63**, et à une tuyauterie de purge **64** ; ledit vérin pneumatique **6**, à tige **61** et à ressort de rappel **62**, étant fixé sur la face amont du caisson **4**, au-dessus de l'arête supérieure **21** du registre **2** et à l'aplomb de celle-ci.

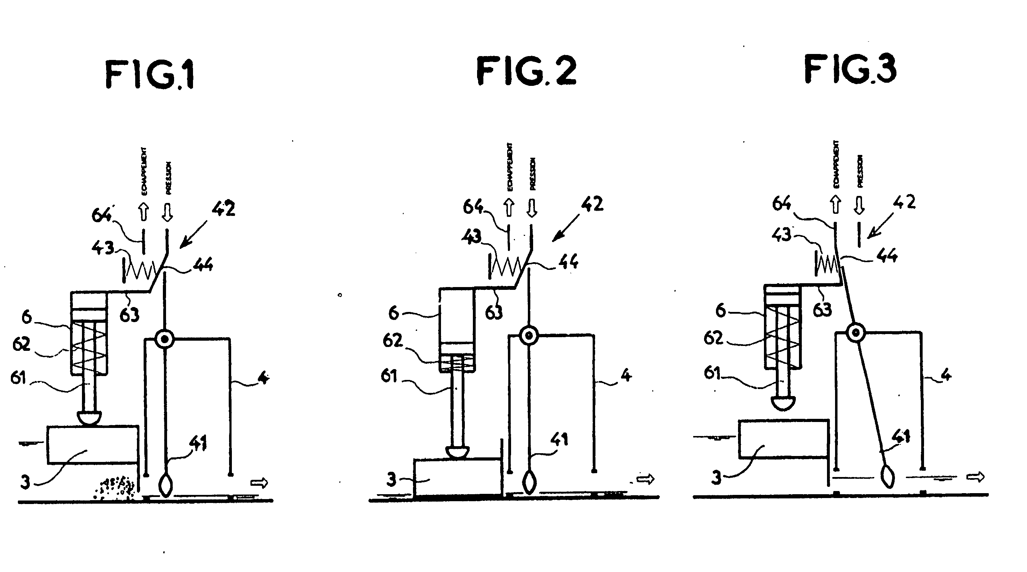

En examinant maintenant plus en détail les figures 1 à 3, illustrant le procédé utilisé, on remarque, sur la figure 1, que, lorsque le bras à flotteur **41** de détection détecte un débit faible ou nul, il provoque, par relâchement du ressort **43**, le déplacement du tiroir **44** du distributeur **42** à deux voies vers la position de mise en communication de la bouteille de gaz comprimé **5** avec le cylindre du vérin **6** par la conduite **63** et l'obturation de la tuyauterie de purge **64** de celui-ci, ce qui entraîne immédiatement la sortie de la tige **61** du vérin **6**, avec compression de son ressort de rappel **62**, et qui a pour effet d'articuler le registre **2** jusqu'à sa position d'ouverture maximale, ce qui libère le passage des matières à l'origine du colmatage, tel que représenté à la figure 2. Comme représenté à la figure 3, dès que le débit normal est rétabli, le bras à flotteur **41** de détection, s'étant articulé en conséquence, comprime le ressort de rappel **43** du tiroir **44** du distributeur **42**, qui est alors ramené en position d'interruption de la mise en communication de la bouteille de gaz comprimé **5** avec le cylindre du vérin pneumatique **6** et de mise en communication dudit cylindre avec la tuyauterie de purge d'air **64**, ce qui permet alors au ressort **62** de rappeler la tige **61** du vérin **6** à l'intérieur du cylindre de celui-ci. Le registre **2**, étant alors entièrement libéré, peut alors remplir à nouveau son rôle normal de régulation en fonction du niveau amont.

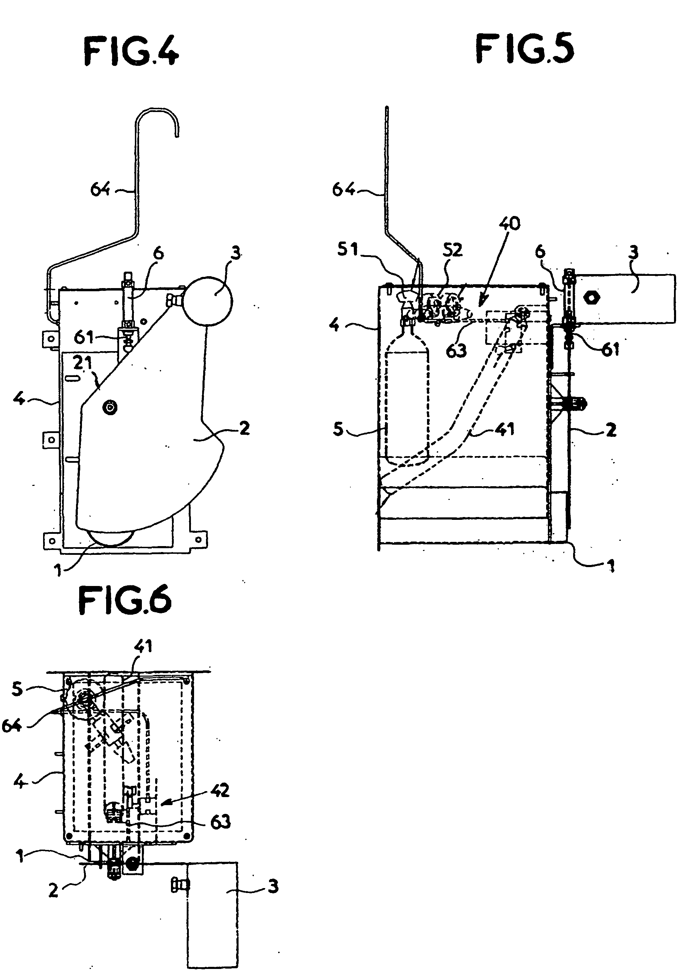

En se rapportant maintenant successivement aux figures 4 à 6, on remarque que, lorsque l'écoulement est normal par rapport à la position du registre**2,** le vérin **6**, dont la tige **61** est complètement rentrée, est inopérant et ne gène donc nullement la libre articulation dudit registre **2** en fonction de la position de son flotteur **3**.

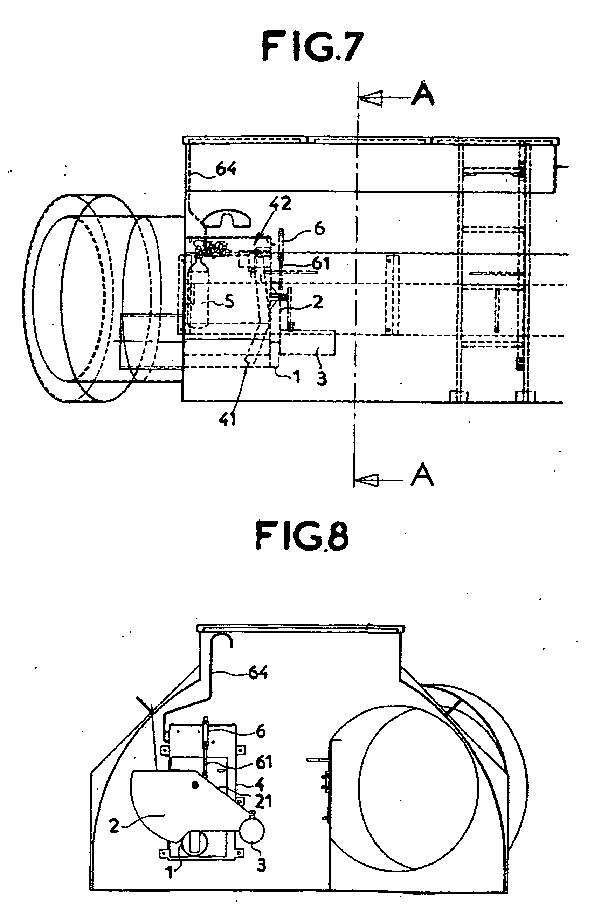

En examinant maintenant les figures 7 et 8, on remarque que, lorsque le régulateur de débit est en situation de colmatage ou de débit nul, le bras à flotteur **41** de détection est totalement articulé vers le bas et, de ce fait, provoque le déplacement du tiroir **44** du distributeur **42** dans le sens de mise sous pression du cylindre du vérin pneumatique **6** et, par conséquent, la sortie totale de la tige **61** dudit vérin **6**. Comme on le remarque sur la figure **8**, cette sortie de tige **61** du vérin **6** provoque l'articulation du registre **2,** jusqu'à obtention de la pleine ouverture de l'orifice **1** du régulateur. Position qui permet le passage et l'évacuation des matières à l'origine du décolmatage, comme cela a déjà été dit pour les figures 1 et 2.

Le régulateur de débit à flotteur, à décolmatage automatique, selon l'invention, trouve principalement son application au sein des déversoirs d'orage, ou à l'aval des bassins d'orage ou de rétention. Ces applications étant liées aux réseaux d'assainissement, notamment en réseau unitaire, mais également en réseau séparatif.

## Revendications

1. Régulateur de débit à flotteur, à décolmatage automatique, comportant un orifice **(1)** à section de passage contrôlée par un registre **(2)** à flotteur **(3)** articulé par rapport à un caisson **(4)** dans lequel est disposé un capteur d'écoulement **(40)** constitué d'un bras à flotteur **(41)** de détection articulé par rapport à la partie supérieure dudit caisson **(4),** ledit bras à flotteur **(41)** actionne un dispositif assurant la pleine ouverture du registre **(2)** dès qu'une absence ou une insuffisance d'écoulement est constatée, **caractérisé en ce que** ledit dispositif assurant la pleine ouverture du registre **(2)** est constitué d'un vérin pneumatique **(6)** à tige **(61)** et à ressort de rappel **(62)**, relié à une bouteille de gaz comprimé **(5)** dont l'ouverture et la fermeture ainsi que la purge dudit vérin (6) sont assurés par un distributeur **(42)** dont le tiroir **(44)** de distribution est rappelé en permanence, par un ressort **(43)** vers la position correspondant à la pleine ouverture de la bouteille de gaz comprimé **(5) ;** la course dudit tiroir **(44)** de distribution étant contrôlée par le bras articulé à flotteur **(41)** du capteur d'écoulement **(40)** de façon que lorsque le tiroir **(44)** de distribution est dans la position correspondant à la pleine ouverture de la bouteille de gaz comprimé **(5),** le registre **(2)** soit forcé par le vérin pneumatique **(6)** dans une position de pleine ouverture de l'orifice de régulation **(1)** et que, dès que le débit est redevenu normal, le bras à flotteur **(41)** articulé comprime le ressort **(43)** de rappel du tiroir **(44)** de distribution qui est alors ramené en position de fermeture de la bouteille de gaz comprimé **(5)** permettant ainsi au registre **(2)** de se libérer et de reprendre sa position normale de régulation.

2. Régulateur de débit selon la revendication 1, **caractérisé en ce que** le vérin pneumatique **(6)** du capteur d'écoulement est fixé contre la face amont du caisson par rapport au sens d'écoulement du liquide dans une position telle, qu'en position rentrée de sa tige **(61)** sous l'action de son ressort de rappel **(62),** l'extrémité de celle-ci soit située en retrait par rapport à l'arête supérieure **(21)** du registre **(2)** du régulateur de débit, lorsque le flotteur **(3)** de manoeuvre dudit registre **(2)** est en position haute, et que, en position totalement sortie de sa tige (**61**), l'extrémité de celle-ci soit au contact dudit registre (**2**) et assure à celui-ci une position de pleine ouverture de l'orifice **(1)** de passage du régulateur de débit

## Patentansprüche

1. Durchflussregler mit Schwimmer und einer automatischen Reinigung umfassend eine Durchlassöffnung (1), welche mittels einer mit einem Schwimmer (3) verbundenen und an einem Behälter (4) gelagerten Klappe (2) geregelt wird, wobei sich im Behälter ein Durchflussmesser (40) befindet, der einen im oberen Bereich des Behälters (4) gelagerten Hebelarm mit einem damit verbundenen Schwimmer (41) umfasst und wobei der Hebelarm und der damit verbundene Schwimmer (41) eine Vorrichtung zum vollständigen Öffnen der Klappe (2) im Falle des Versiegens oder eines ungenügenden Durchflusses antreibt, **dadurch gekennzeichnet, dass** die Vorrichtung zum vollständigen Öffnen der Klappe (2) einen Pneumatikzylinder (6) umfasst, der einen Stößel (61) und eine Rückholfeder (62) aufweist und welcher mit einer Gasflasche (5) verbunden ist, wobei das Öffnen und der Verschluss, wie auch das Entlüften des Pneumatikzylinders (6) mittels eines Verteilers (42) erfolgt, dessen Steuerschieber (44) kontinuierlich von einer Feder (43) zur Offen-Position für die Gasflasche (5) vorgespannt wird und wobei die Bewegung des Steuerschiebers (44) vom Hebelarm und dem damit verbundenen Schwimmer (41) des Durchflussmessers (40) solchermaßen gesteuert wird, dass für den Fall, dass sich der Steuerschieber (44) in der vollständig geöffneten Position für die Gasflasche (5) befindet, die Klappe (2) vom Pneumatikzylinder (6) in eine solche Position gebracht wird, dass die Durchlassöffnung (1) vollständig freigegeben wird und durch die Zurückführung des Durchlasses auf einen Normalwert der Hebelarm mit dem damit verbundenen Schwimmer (41) die Rückholfeder (43) des Steuerschiebers (44) komprimiert und diesen zu einer Position zurückführt, bei dem die Gasflasche (5) geschlossen ist und es so der Klappe (2) ermöglicht wird, sich frei zu bewegen und ihre normale Regelungsposition einzunehmen.

2. Durchflussmesser nach Anspruch 1, **dadurch gekennzeichnet, dass** der Pneumatikzylinder (6) des Durchflussmessers an einer zum Oberwasser hinweisenden Fläche des Behälters in einer solchen Stellung im Bezug auf die Richtung des Flüssigkeitsausstroms gehaltert ist, so dass in einer durch die Rückholfeder (62) bewirkten, vollständig eingefahrenen Position des Stößels (61) sich dessen äußerstes Ende in einem Abstand zur oberen Anschlagfläche (21) der Klappe (2) des Durchflussreglers für den Fall befindet, wenn der Schwimmer (3) der Klappe (2) in einer angehobenen Position ist und bei einer vollständig ausgefahrenen Stellung des Stößels (61) dessen äußerstes Ende sich im Kontakt mit der Klappe (2) befindet, so dass für diese eine vollständig geöffnete Stellung der Durchlassöffnung (1) des Durchflussreglers sichergestellt ist.

## Claims

1. A float-type flow regulator with automatic unclogging comprising an opening (1) having a flow cross-section controlled by a float-type damper (2) articulated in relation to a caisson (4) in which is provided a flow gauge (40) consisting of a float-type detection arm (41) articulated in relation to the upper part of said caisson (4), said float-type arm (41) actuating a device which ensures the full opening of the damper (2) as soon as it detects that there is no or insufficient flow,
**characterised in that**
said device which ensures the full opening of the damper (2) consists of a pneumatic jack (6) with a shaft (61) and a return spring (62) which is connected to a bottle of compressed gas (5), the opening, closing and purging of said jack (6) being ensured by a distributor (42) with a distributing regulator (44) which is continuously returned by a spring (43) towards the position corresponding to the full opening of the bottle of compressed gas (5); the course of said distributing regulator (44) being controlled by the articulated float-type arm (41) of the flow gauge (40) in such a manner that when the distributing regulator (44) is in the position corresponding to the full opening of the bottle of compressed gas (5), the damper (2) is forced by the pneumatic jack (6) into a position in which the regulating opening (1) is fully open and that, as soon as the flow rate returns to normal, the articulated float-type arm (41) compresses the return spring (43) of the distributing regulator (44) which is then returned to the position in which the bottle of compressed gas (5) is closed, thereby permitting the damper (2) to free itself and to assume its normal regulating position once more.

2. A flow regulator in accordance with claim 1,
**characterised in that**
the pneumatic jack (6) of the flow gauge is fixed against the upstream face of the caisson, seen in relation to the direction of flow of the liquid, in such a position that, when its shaft (61) is retracted by the action of its return spring (62), its end is located set back from the upper edge (21) of the damper (2) of the flow regulator when the control float (3) of said damper (2) is in the top position and that, when its shaft (61) is completely extended, its end is in contact with said damper (2) and ensures it a position in which the flow opening (1) of the flow regulator is fully open.
